# EUROPÄISCHE PATENTSCHRIFT

(11) **EP 2 235 577 B1**
(45) Veröffentlichungstag und Bekanntmachung des Hinweises auf die Patenterteilung: **05.06.2019**
(21) Anmeldenummer: 08863573.5
(22) Anmeldetag: 10.12.2008
(51) Int. Cl.: G02B 27/09, G02B 26/08, G02B 21/06, G02B 21/16, G02B 21/10, G02B 27/58

(54) **MIKROSKOP**
MICROSCOPE
MICROSCOPE

(30) Priorität: 20.12.2007 DE 102007063274
(43) Veröffentlichungstag der Anmeldung: 06.10.2010
(60) Teilanmeldung: 19160825.6
(73) Patentinhaber: Carl Zeiss Microscopy GmbH, 07745 Jena (DE)
(72) Erfinder: LIPPERT, Helmut, 07745 Jena (DE); WOLLESCHENSKY, Ralf, 07743 Jena (DE); ROHRBACH, Alexander, 79100 Freiburg (DE); FAHRBACH, Florian, 69115 Heidelberg (DE)
(74) Vertreter: Loritz, Rainer
(86) Internationale Anmeldenummer: PCT/EP2008/010455
(87) Internationale Veröffentlichungsnummer: WO 2009/080210

(56) Entgegenhaltungen:
- DE-A1- 10 257 423
- DE-A1- 10 257 423
- JP-A- 2003 185 930
- RIEKO ARIMOTO ET AL: "IMAGING PROPERTIES OF AXICON IN A SCANNING OPTICAL SYSTEM", APPLIED OPTICS, OPTICAL SOCIETY OF AMERICA, WASHINGTON, DC; US, Bd. 31, Nr. 31, 1. November 1992 (1992-11-01), Seiten 6653-6657, XP000310749, ISSN: 0003-6935
- ENGELBRECHT C J ET AL: "RESOLUTION ENHANCEMENT IN A LIGHT-SHEET-BASED MICROSCOPY (SPIM)" OPTICS LETTERS, OSA, OPTICAL SOCIETY OF AMERICA, WASHINGTON, DC, US, Bd. 31, Nr. 10, 15. Mai 2006 (2006-05-15), Seiten 1477-1479, XP001242795 ISSN: 0146-9592 in der Anmeldung erwähnt
- DATABASE INSPEC [Online] THE INSTITUTION OF ELECTRICAL ENGINEERS, STEVENAGE, GB; 12. September 2002 (2002-09-12), GARCES-CHAVEZ V ET AL: "Simultaneous micromanipulation in multiple planes using a self-reconstructing light beam" XP002522638 Database accession no. 7478439 & Nature Nature Publishing Group UK, Bd. 419, Nr. 6903, 12. September 2002 (2002-09-12), Seiten 145-147, ISSN: 0028-0836 in der Anmeldung erwähnt
- DATABASE INSPEC [Online] THE INSTITUTION OF ELECTRICAL ENGINEERS, STEVENAGE, GB; 15. Dezember 2006 (2006-12-15), WILSON T ET AL: "Scanning two photon fluorescence microscopy with extended depth of field" XP002522639 Database accession no. 9294808 & Optics Communications Elsevier Netherlands, Bd. 268, Nr. 2, 2006, Seiten 253-260, ISSN: 0030-4018 in der Anmeldung erwähnt
- DATABASE INSPEC [Online] THE INSTITUTION OF ELECTRICAL ENGINEERS, STEVENAGE, GB; 1. September 2007 (2007-09-01), HUISKEN J ET AL: "Even fluorescence excitation by multidirectional selective plane illumination microscopy (mSPIM)" XP002522640 Database accession no. 9902517 & Optics Letters Optical Society of America USA, Bd. 32, Nr. 17, 1. September 2007 (2007-09-01), Seiten 2608-2610, ISSN: 0146-9592 in der Anmeldung erwähnt
- RIEKO ARIMOTO ET AL: "IMAGING PROPERTIES OF AXICON IN A SCANNING OPTICAL SYSTEM", APPLIED OPTICS, OPTICAL SOCIETY OF AMERICA, WASHINGTON, DC; US, vol. 31, no. 31, 1 November 1992 (1992-11-01), pages 6653-6657, XP000310749, ISSN: 0003-6935

## Beschreibung

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs umfaßt. Die Mittel zur Beleuchtung umfassen eine kohärentes Licht abstrahlende Beleuchtungsquelle.

Ein Mikroskop, bei dem Beleuchtungsstrahlengang und Detektionsstrahlengang im wesentlichen senkrecht zueinander angeordnet sind, und bei der die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der *Selective-Plane-Illumination-Microscopy* (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit die Form eines Lichtblatts.

Die SPIM-Technologie ist beispielsweise beschrieben in Stelzer et al., Optics Letters 31, 1477 (2006), in Stelzer et al., Science 305, 1007 (2004), in der DE 102 57 423 A1 und in der WO2004/0530558 A1.

Ein Nachteil der bekannten Technologien besteht darin, daß bei ihnen ein Kompromiß hinsichtlich axialer Auflösung einerseits und Bildfeldgröße andererseits eingegangen werden muß, da die Erzeugung eines absolut ebenen Lichtblattes ohne jegliche Strahldivergenz prinzipiell nicht möglich ist. Wird das Lichtblatt beispielsweise im Fokus einer Zylinderlinse erzeugt, so ergibt sich ein hyperbolisches Strahlprofil. Das beobachtbare Bildfeld, d.h. der Bereich, in dem annähernd die Bedingungen an ein ebenes Lichtblatt erfüllt sind, korrespondiert hinsichtlich seiner Ausdehnung entlang der Beleuchtungsrichtung mit der Schärfentiefe der verwendeten Zylinderlinse und der daran hängenden Optik. Die Schärfentiefe wiederum hängt direkt von der numerischen Apertur der Zylinderlinse ab und ist daher mit der axialen Auflösung entlang der optischen Achse des Abbildungsobjektivs gekoppelt. In der Regel wird die numerische Apertur so gewählt, daß die axiale Ausdehnung des Lichtblatts in den Randbereichen des interessierenden Bildfeldes etwa doppelt so groß wie im Bildzentrum ist. Typischerweise liegen die numerischen Aperturen im Bereich um 0,05. Die Möglichkeiten zur Beobachtung großflächiger Probenbereiche mit hoher axialer Auflösung sind daher eng begrenzt. Dieses Problem besteht nicht nur bei der Verwendung eines statischen Lichtblattes, sondern auch bei der Verwendung eines Strahls, der abtastend über die Probe geführt wird.

Ein weiteres Problem, was bei den bekannten SPIM-Verfahren überwiegend besteht, ist Schattenwurf in der Probe. Da in bezug auf die Detektionsrichtung die Probe von der Seite mit relativ geringer numerischer Apertur bestrahlt wird, und einige Bereiche in der Probe höhere Absorptionsraten aufweisen bzw. Licht stärker streuen als andere, kommt es in der Beleuchtungsrichtung hinter diesen Bereichen zu gegenüber der Umgebung abgedunkelten Gebieten, die sich als Schatten des stärker absorbierenden bzw. streuenden Bereichs bemerkbar machen. In Aufnahmen, die mit SPIM-Technologie gewonnen werden, führt dies zu einem Streifenmuster. Dies ist beispielsweise der Fall bei den in der DE 102 57 423 A1 und in der DE 10 2005 027 077 A1 beschriebenen Anordnungen. Mit diesen wird ein starres Lichtblatt erzeugt, daß in seiner Dicke, d.h. seiner Ausdehnung entlang der optischen Achse des Abbildungsobjektivs - im folgenden mit Z bezeichnet - nicht variabel ist. Der Schattenwurf läßt sich reduzieren, wenn die Probenebene aus unterschiedlichen Winkeln in der Fokusebene - der XY-Ebene - mit einem Lichtblatt beleuchtet wird, wozu entweder eine Vielzahl von Lichtquellen oder ein sich bewegendes optisches Element wie ein Scannerspiegel oder ein räumlicher Lichtmodulator (SLM) notwendig sind, wie in der DE 10 2007 015063.8 beschrieben wird. Eine Reduzierung der Effekte des Schattenwurfs wird auch durch sukzessive Verwendung zweier Lichtblätter von zwei einander gegenüberliegenden Seiten erreicht, wobei zusätzlich der Einstrahlwinkel variiert werden kann, wie in einem Artikel von Huisken et al., Optics Letters 32 (17), 2007, S.2608-2610, beschrieben wird. Der Aufbau ist jedoch sehr aufwendig, ebenso wie die anschließende Auswertung.

Eine Schattenbildung tritt auch bei dem in der EP 0 248 204 B1 und in der US 4,826,299 beschriebenen Anordnungen auf. In jedem Fall sind Anordnungen, die den Schattenwurf zumindest reduzieren, aufwendig gebaut und benötigen eine erhebliche Anzahl von Komponenten, die aufeinander abgestimmt werden müssen.

Auf der anderen Seite werden beispielsweise zur Erzeugung von optischen Pinzetten sogenannte Besselstrahlen verwendet, d.h. beugungsfreie Strahlen, deren transversales Intensitätsprofil - im Falle eine SPIM-Mikroskops also entlang der Z-Achse, der optischen Achse des Abbildungsobjektivs - sich entlang der optischen Achse des Beleuchungsstrahls - hier der X-Richtung - nicht ändert. Das transversale Intesitätsprofil dieser Strahlen läßt sich als Besselfunktion oder als eine Überlagerung von Besselfunktionen beschreiben und ist üblicherweise rotationssymmetrisch. Die Erzeugung einer optischen Pinzette mit Hilfe von Besselstrahlen ist beispielsweise in einem Artikel von K. Dholakia et al., Nature Vol.419, 2002, Seite 145-147 beschrieben. Zur Erzeugung von Besselstrahlen kann man beispielsweise konische Linsen, sogenannte Axikons, verwenden, wie in einem Artikel von Arimoto et al., Applied Optics Vol.31, Nr.31 (1992), Seite 6653-6657 beschrieben ist. Die Funktion eines Axikons kann auch von einem entsprechend geformten, rotationssymmetrischen diffraktiven optischen Element (DOE) in Form eines Transmissions- oder Phasengitters übernommen werden. Die Verwendung eines solchen Phasengitters zur Erzeugung von Besselstrahlen im Rahmen der Laser-Scanning-Mikroskopie zur Fluoreszenzuntersuchung ist beispielsweise in einem Artikel von Wilson et al., Optics Communications 268 (2006), Seite 253-260 beschrieben.

Eine wesentliche Eigenschaft dieser rotationssymmetrischen Besselstrahlen ist, daß der Schattenwurf auf einen kleinen Bereich hinter dem einen Schatten erzeugenden Objekt beschränkt ist, anschließend findet eine Rekonstruktion des Besselstrahls statt.

Aufgabe der Erfindung ist es daher, eine Anordnung zu entwickeln, die die oben genannten Nachteile des Standes der Technik überwindet, insbesondere also ein Lichtblatt mit einer erhöhten Schärfentiefe im Bildfeld zu erzeugen, wobei bevorzugt auch auf einfache Weise der Schattenwurf verringert bzw. vermieden werden soll.

Diese Aufgabe wird bei einer nicht zur Erfindung gehörigen, für deren Verständnis jedoch hilfreichen Ausführung eines Mikroskops der eingangs beschriebenen Art dadurch gelöst, daß die Mittel zur Beleuchtung eine Besseloptik umfassen, die aus einem Lichtstrahl mindestens zwei ebene Wellen erzeugt und den ebenen Wellen Ausbreitungsrichtungen vorgibt, wobei die Ausbreitungsrichtung jeder der ebenen Wellen mit der Fokusebene jeweils einen spitzen Winkel einschließt, dessen Betrag für jede der ebenen Wellen gleich ist, so daß die ebenen Wellen in der Fokusebene konstruktiv interferieren, wodurch ein Lichtblatt erzeugt wird. Während die im Stand der Technik beschriebenen Mittel zur Erzeugung von Besselstrahlen ausschließlich rotationssymmetrische Besselstrahlen mit einer Vielzahl von einander überlagernden ebenen Wellen erzeugen, werden in der Besseloptik nur mindestens zwei ebene Wellen erzeugt, wobei zwei in der Regel schon ausreichend sind und einen guten Kompromiß bezüglich der konstruktiven Anforderungen einerseits und der Lichtblattqualität andererseits darstellen. Dennoch können auch mehr als zwei ebene Wellen verwendet werden. Die Wellen laufen aufeinander zu und interferieren in dem Bereich, in dem sie einander überlagern, konstruktiv, so daß ein Lichtblatt erzeugt wird. Bei entsprechender Anordnung der Besseloptik in bezug auf das Abbildungsobjektiv findet diese konstruktive Interferenz in der Fokusebene statt. Selbstverständlich und vom Fachmann ebenso mit erfaßt können Besseloptik und Abbildungsobjektiv auch so zueinander angeordnet werden, daß die konstruktive Interferenz außerhalb der Fokusebene aber parallel zu dieser statt findet, oder aber auch so, daß die konstruktive Interferenz in einer zur Fokusebene angekippten Ebene stattfindet. Der spitze Winkel, den die beiden Ausbreitungsrichtungen mit der Fokusebene bzw. der Ebene, in der die konstruktive Interferenz stattfindet, einschließen, hängt von der gewünschten Bildfeldgröße und damit verbunden von der gewünschten Lichtblattdicke ab. Außerdem können aufgrund der bei der Interferenz entstehenden Nebenmaxima sogenannte Seitenlichtblätter entstehen, der Winkel muß also so gewählt werden, daß diese sich möglichst nicht störend bemerkbar macht. Als Lichtquellen werden üblicherweise Laser verwendet. Das auf diese Weise erzeugte Lichtblatt weist gegenüber den herkömmlich erzeugten Lichtblättern eine erhöhte Schärfentiefe auf, d.h. die Ausdehnung des im wesentlichen ebenen Bereichs des Lichtblatts entlang der Beleuchtungsrichtung X ist höher als bei herkömmlich erzeugten Lichtblättern, so daß der verwertbare Ausschnitt des Bildfeldes des Abbildungsobjektivs größer ist. Ein weiterer Vorteil ist außerdem, daß aufgrund der speziellen Eigenschaften von Besselstrahlen der Schattenwurf in Beleuchtungsrichtung vermindert wird. Eine Beleuchtung mit Lichtblättern aus verschiedenen Richtungen in der Fokusebene ist daher nicht notwendig. Der Lichtstrahl, der in die Besseloptik eintritt, ist dabei häufig durch einen davor angeordneten Kollimator kollimiert, dies ist aber keine notwendige Bedingung.

Eine solche Besseloptik läßt sich auf verschiedene Weise realisieren. In einer ersten Ausgestaltung dieser nicht zur Erfindung gehörigen, jedoch für das Verständnis hilfreichen Ausführung umfaßt die Besseloptik eine Blende mit einem ersten und einem zweiten Spalt, wobei beide Spalte in Ebenen parallel zur Fokusebene und auf verschiedenen Seiten der Fokusebene liegen. Die Spalte begrenzen das einfallende, parallele und kollimierte Licht und wirken selbst als Lichtquellen, die zylinderförmige Lichtwellen abstrahlen. Die Besseloptik umfaßt außerdem eine erste Zylinderlinse. Die Symmetrieachse des Zylinders, d.h. die Rotationsachse, liegt in der Fokusebene. Die Zylinderlinse wandelt die von den Spalten abgestrahlten Wellen in zwei ebene Wellen um und lenkt diese auf die Fokusebene, wo sie interferieren.

Je nach verwendeter Wellenlänge und in Abhängigkeit von den Parametern der Zylinderlinse - wie Brechkraft und Krümmungsradius - wird der Abstand der beiden Spalte gewählt, typische Werte für den Abstand der Spalte liegen beispielsweise im Bereich von 4 mm bis 12 mm, ihre Breite, die auch bestimmt, welche Ausdehnung das Lichtblatt entlang der Beleuchtungsrichtung hat, kann beispielsweise zwischen 10 µm und 100 µm liegen. Die Werte können jedoch auch außerhalb liegen, da sie letztendlich in bezug auf die gewünschte Bildfeldgröße und Lichtblattdicke eingestellt werden müssen. Aufgrund der Verwendung der beiden Spalte kommt es jedoch zu Lichtverlusten, das Bild wird dunkler.

Dies läßt sich mit einer anderen Ausgestaltung der nicht zur Erfindung gehörigen, für das Verständnis jedoch hilfreichen Ausführung vermeiden. Statt einer Blende mit zwei Spalten und einer Zylinderlinse umfaßt die Besseloptik in diesem Fall ein Prisma. Die Eintrittsfläche des Prismas steht senkrecht zu der Richtung, aus der der Lichtstrahl kommt. Das Prisma verfügt über eine nicht-brechende Kante, die in der Fokusebene liegt. Von der Funktion her kann man sich das Prisma aus zwei separaten Prismen zusammengesetzt denken, wobei beide Prismen an ihrer - dem Prismenwinkel gegenüberliegenden - Grundfläche zusammengesetzt sind. Während die Eintrittsflächen beider Prismen parallel sind, schließen die Austrittsflächen mit der nicht-brechenden Kante einen Winkel von weniger als 90 Grad ein. Die Prismenwinkel sind jeweils gleich. Der Teil des Lichtstrahls, der oberhalb der Fokusebene verläuft, wird auf diese Weise in eine andere Richtung abgelenkt als derjenige Teil des Lichtstrahls, der unterhalb der Fokusebene auf das Prisma trifft.

Damit sich die erzeugten ebenen Wellen in der Fokusebene konstruktiv überlagern, muß der Prismenwinkel entsprechend klein gewählt werden. Typischerweise liegt der Prismenwinkel in einem Bereich von 5 Grad bis 40 Grad, wobei die Werte wesentlich durch Strahldurchmesser, Brechkraft und / oder gewünschte Bildfeldgröße bestimmt werden. Auch außerhalb dieses Bereichs liegende Werte sind daher möglich, wobei dann jedoch unter Umständen Verluste in Kauf genommen werden müssen. Die Ausdehnung des Lichtblattes hängt in diesem Fall von den besonderen Eigenschaften des Prismas wie dem Brechungsindex und dem Prismenwinkel ab. Die Apertur des Strahls kann die Ausdehnung des Lichtblatts entlang der Beleuchtungsrichtung (X) ebenfalls beeinflussen, sofern nicht die ganze Eintrittsfläche mit Licht bestrahlt wird. Auch die Dicke des Lichtblatts entlang der optischen Achse des Abbildungsobjektivs (Z) wird durch die Prismeneigenschaften, insbesondere den Prismenwinkel beeinflußt.

Statt eines Prismas kann auch ein DOE mit gleicher Wirkung verwendet werden, beispielsweise kann die Besseloptik ein Phasen- oder Transmissionsgitter aufweisen. Dieses wird in einer Zwischenbildebene des Beleuchtungsstrahlengangs plaziert. Die beiden ebenen Wellen, die miteinander interferieren, können beispielsweise die Wellenzüge der positiven und negativen ersten Beugungsordnung des Gitters sein. Auch höhere Beugungsordnungen sind verwendbar. Der störende Lichtanteil der nullten Beugungsordnung wird bevorzugt ausgeblendet, wozu die Besseloptik entsprechende Mittel aufweist, beispielsweise eine Strahlfalle, welche mittig in einer der Zwischenbildebene im Strahlengang nachgeordneten Pupillenebene angeordnet ist.

Wie im Fall eines Prismas ist die Verwendung einer Zylinderlinse nicht zwingend, wenn das Gitter bzw. das Prisma in unmittelbarer Nähe der Fokusebene angeordnet werden können, da die Wellen unmittelbar nach dem Austritt aus dem Prisma bzw. dem Gitter miteinander interferieren. Ist eine solche Anordnung nicht möglich, so kann man sich durch die Verwendung weiterer optische Elemente behelfen. Die Besseloptik weist dann bevorzugt eine erste und zweite Zylinderlinse auf, wobei Prisma oder Phasen- oder Transmissionsgitter, erste Zylinderlinse und zweite Zylinderlinse entsprechend einer 4f-Geometrie ausgestaltet und angeordnet sind. Prisma bzw. Gitter befinden sich dabei in der beleuchtungsseitigen Brennebene der ersten Zylinderlinse, die optische Achse des Abbildungsobjektivs liegt etwa im Bereich der objektseitigen Brennebene der zweiten Zylinderlinse. Erste und zweite Zylinderlinse sind im wesentlichen identisch aufgebaut, jedoch spiegelsymmetrisch angeordnet. Die Spiegelebene befindet sich in der objektseitigen Brennweite der ersten Zylinderlinse und der beleuchtungsseitigen Brennebene der zweiten Zylinderlinse. Die Brennweiten der Linsen sind jeweils identisch, so daß sich das Prisma bzw. das Gitter sowie die Probe im vierfachen Abstand der Brennweite f der Zylinderlinsen zueinander befinden. Diese 4f-Anordnung bietet den Vorteil, daß das Licht in derjenigen Brennebene, die erster und zweiter Zylinderlinse gemeinsam ist, und auch als Fourierebene bezeichnet wird, auf verschiedene Weise manipuliert werden kann. Beispielsweise kann die Besseloptik eine Art von Apodisierungsblende in der Fourierebene umfassen, die die nullte Beugungsordnung des verwendeten Gitters ausblendet.

Die Verwendung einer optischen Anordnung mit 4f-Geometrie bei der Besseloptik ist vorteilhaft dann einsetzbar, wenn Prisma- oder Phasen- oder Transmissionsgitter nicht so nah, wie es erforderlich wäre, bei der Fokusebene angeordnet werden können, beispielsweise auch aus Platzgründen.

Während die oben beschriebenen Anordnungen alle die Verwendung eines statischen Lichtblatts als Voraussetzung haben, läßt sich die Aufgabe der Erfindung dadurch lösen, dass die zuletzt beschriebene optische Anordnung mit 4f-Geometrie dahingehend abgewandelt wird, daß sie für die Erzeugung eines dynamischen, effektiven Lichtblattes verwendet werden kann, welches die gleichen Vorteile in bezug auf Schärfentiefe und Schattenwurf aufweist. Bei dem eingangs beschriebenen Mikroskop umfassen in diesem Fall die Mittel zur Beleuchtung ein optisches Element, mit dem aus dem Lichtstrahl ein rotationssymmetrischer Besselstrahl erzeugt wird. Das optische Element kann dabei bevorzugt eine ringförmige Blende, ein Axikon oder eine Phasenmaske sein und weist Rotationssymmetrie um die optische Achse auf. Die Mittel zur Beleuchtung umfassen außerdem eine erste und eine zweite Linse, in diesem Fall jedoch nicht Zylinderlinsen, sondern um die optische Achse rotationssymmetrische Linsen. Optisches Element, erste und zweite Linse sind entsprechend einer 4f-Geometrie mit einer Fourierebene zwischen den beiden Linsen ausgestaltet und angeordnet. Der Besselstrahl wird auf diese Weise in die Fokusebene des Abbildungsobjektivs abgebildet. Schließlich umfassen die Mittel zur Beleuchtung auch Abtastmittel, mit denen der Besselstrahl in der Fokusebene des Abbildungsobjektivs die Probe abtastet. Die Abtastmittel können beispielsweise als rotierender Spiegel mit einer Rotationsachse in der Fourierebene ausgestaltet sein.

Es versteht sich, daß die vorstehend genannten und nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachstehend wird die Erfindung anhand der beigefügten Zeichnungen, die auch erfindungswesentliche Merkmale zeigen, näher erläutert. Es zeigen:
- Fig.1: den grundsätzlichen Aufbau eines SPIM-Mikroskops,
- Fig.2: das Prinzip einer Beleuchtungsoptik mit Spaltmaske und Zylinderlinse,
- Fig.3: eine Beleuchtungsoptik mit einem Prisma,
- Fig.4: eine 4f-Anordnung mit einer Phasenmaske und
- Fig.5: eine 4f-Anordnung mit einem dynamischen Lichtblatt.

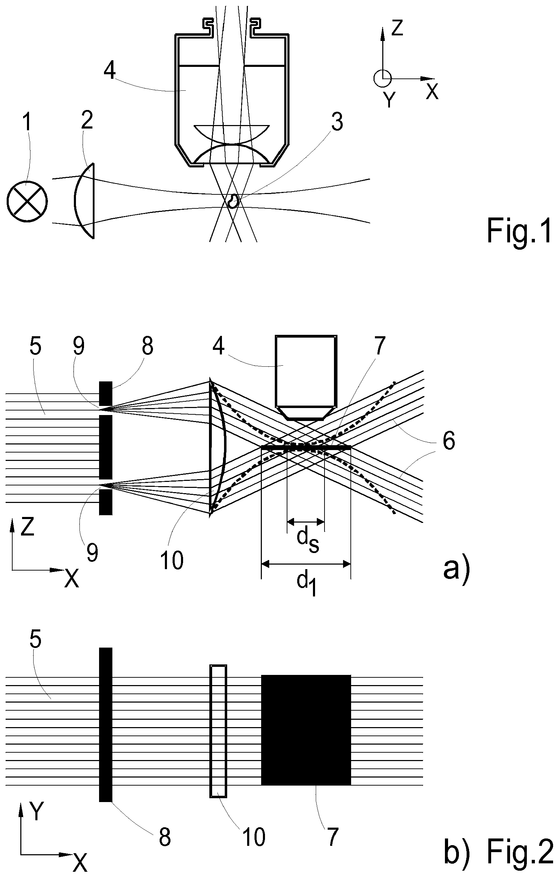

In Fig.1 ist zunächst der grundsätzliche Aufbau eines SPIM-Mikroskops dargestellt. Das Licht einer Beleuchtungsquelle 1 wird über eine Beleuchtungsoptik 2 zu einem Lichtblatt geformt und auf eine Probe 3 gelenkt. Probe und Lichtblatt befinden sich in der Fokusebene eines Abbildungsobjektivs 4. Die optische Achse des Abbildungsobjektivs 4 steht senkrecht zu der Richtung, aus der die Probe 3 beleuchtet wird. Die Beleuchtungsoptik 2 umfaßt in der Regel mehrere optische Elemente, die das kohärente Licht der Beleuchtungsquelle 1 kollimieren und daraus ein Lichtblatt formen. Im Stand der Technik umfaßt die Beleuchtungsoptik 2 in der Regel auch eine Zylinderlinse, deren flache Seite zur Probe weist und deren gewölbte Seite in Richtung der Beleuchtungsquelle weist. Im folgenden sollen mehrere Beispiele für Beleuchtungsoptiken 2 erläutert werden, mit denen die Erzeugung eines Lichtblatts mit erhöhter Schärfentiefe und verringertem Schattenwurf gegenüber aus dem Stand der Technik bekannten Anordnungen möglich ist.

In Fig.2 ist eine erste solche Anordnung dargestellt, in Fig.2a in einer Seitenansicht, die der Ansicht aus Fig.1 entspricht, und in Fig.2b in einer Ansicht, die beispielsweise einer Draufsicht aus Richtung des Abbildungsobjektivs 4 entspricht. Die in Fig.2 gezeigte, nicht zur Erfindung gehörige, jedoch für deren Verständnis hilfreiche Anordnung verfügt über eine Besseloptik, die aus einem kollimierten Strahl 5 zwei ebene Wellen 6 erzeugt. Die Besseloptik gibt dabei den ebenen Wellen 6 Ausbreitungsrichtungen derart vor, daß jede der Ausbreitungsrichtungen der ebenen Wellen mit der Fokusebene des Abbildungsobjektivs 4 einen spitzen Winkel einschließt. Der Betrag des Winkels ist für beide ebenen Wellen gleich, der absolute Wert ist in einem Fall jedoch positiv und im anderen negativ, so daß beide ebenen Wellen von verschiedenen Seiten auf die Fokusebene treffen. Dort interferieren sie konstruktiv, wodurch ein Lichtblatt 7 erzeugt wird.

Die in Fig.2 gezeigte Besseloptik umfaßt eine Blende 8 mit zwei Spalten 9. Beide Spalte 9 liegen in Ebenen parallel zur Fokusebene, jedoch auf verschiedenen Seiten der Fokusebene. Die von den Spalten 9 ausgehenden näherungsweise zylinderförmigen beiden Wellen werden durch eine erste Zylinderlinse 10 zu den ebenen Wellen 6 umgeformt und auf die Fokusebene gelenkt. Die Rotationsachse der Zylinderlinse liegt dabei in der Fokusebene. Die Blende 8 ist dabei in einer Pupillenebene des Beleuchtungsstrahlengangs angeordnet.

Das auf diese Weise generierte Lichtblatt 7 hat gegenüber den herkömmlich erzeugten Lichtblättern eine erhöhte Schärfentiefe in der Beobachtungsrichtung Z. Ursache dafür ist, daß das auf diese Weise erzeugte Lichtblatt 7 in einem größeren Bereich entlang der Beleuchtungsrichtung X tatsächlich eine im wesentlichen ebene Form annimmt, nämlich in dem Bereich, wo sich die ebenen Wellen 6 konstruktiv überlagern. Dieser Bereich ist in Fig.2a mit d₁ gekennzeichnet. Zum Vergleich ist der klassische Verlauf des Lichtblattes durch die gestrichelte Linie gekennzeichnet. Der tatsächlich verwertbare Bereich hat in X-Richtung dann nur eine Ausdehnung dₛ. Die Ausdehnung d₁ hängt von der Breite der verwendeten Spalte 9 ab. Je breiter diese sind, desto größer ist im Prinzip auch der Bereich, der für eine konstruktive Interferenz zur Verfügung steht. Aufgrund der besonderen Eigenschaften von Besselstrahlen ist auch der Schattenwurf vermindert, da sie sich in einem relativ kurzen Abstand zu einer Probe 3 in der Fokusebene wieder selbst rekonstruieren.

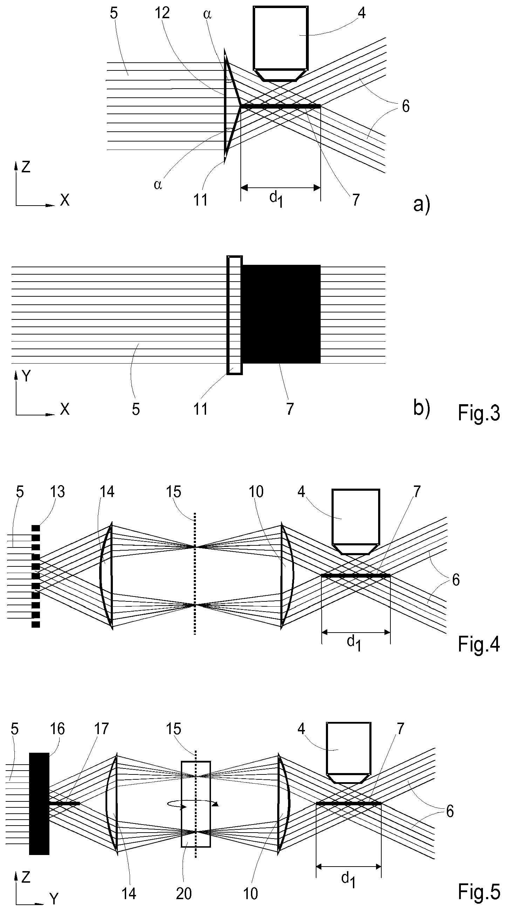

Nachteilig bei dieser Anordnung ist, daß durch die beiden Spalte 9 die zur Verfügung stehende Lichtmenge stark reduziert wird. Die Helligkeit wird dadurch stark vermindert. Dies läßt sich mit der in Fig.3 gezeigten, ebenfalls nicht zur Erfindung gehörigen, jedoch deren Verständnis erleichternden Anordnung vermeiden. Analog zu Fig.2 zeigt Fig.3a eine Seitenansicht des Mikroskops entsprechend der Ansicht in Fig.1, und Fig.3b eine Draufsicht aus Richtung des Abbildungsobjektivs 4. Anstelle einer Blende mit zwei Spalten und einer Zylinderlinse umfaßt die Besseloptik hier ein Prisma 11. Das Material des Prismas 11 wird in der Regel in Abhängigkeit von der Wellenlänge des Lichts gewählt. Das Prisma 11 kann auch auswechselbar gestaltet sein, so daß beispielsweise bei Wechsel der Wellenlänge auch das Prisma 11 gewechselt wird. Dies kann dabei mit einem dafür vorgesehenen Mechanismus auch automatisch erreicht werden. Um den gewünschten Effekt der konstruktiven Interferenz zu erreichen muß das Prisma 11 einen kleinen Prismenwinkel α aufweisen, er liegt üblicherweise im Bereich zwischen 5 Grad und 40 Grad, kann aber auch außerhalb dieses Bereichs liegen. Die Ausdehnung des Lichtblatts 7 in X-Richtung und seine Dicke in Z-Richtung werden von den Prismeneigenschaften, insbesondere vom Prismenwinkel α beeinflußt. Je kleiner der Prismenwinkel α ist, desto kleiner ist auch der spitze Winkel, den die Ausbreitungsrichtungen der ebenen Wellen mit der Fokusebene einschließen. Dies führt zu einer größeren Ausdehnung des Lichtblatts in Z-Richtung, aber auch in X-Richtung, so daß ein geeigneter Kompromiß gefunden werden muß. Das Prisma 11 verfügt über eine Eintrittsfläche 12, die senkrecht zur Strahlrichtung des Lichtstrahls 5 steht. Das Prisma 11 ist in der Regel einstückig gefertigt, kann aber beispielsweise auch aus zwei gleichartigen Prismen zusammengesetzt werden, wobei die beiden Prismen mit ihrer Grundfläche, die den Prismenwinkel α gegenüberliegen, zusammengesetzt sind, und sich die Grundflächen der Prismen in der Fokusebene befinden. Die beiden Austrittsflächen bilden in der Fokusebene eine nicht-brechende Kante. Der Teil des Lichtstrahls 5, der oberhalb der Fokusebene verläuft, wird auf diese Weise in eine andere Richtung abgelenkt, als der Teil des Lichtstrahls 5 in der unteren Hälfte.

Ebenso wie bei der in Fig.2 gezeigten Anordnung dient die Fokusebene hier nur als Bezug, es ist selbstverständlich möglich, falls es die Anwendung erfordert, die optische Achse des Abbildungsobjektivs 4 in einem anderen Winkel zur Beleuchtungsrichtung anzuordnen. Dies ist als rein konstruktive Maßnahme von den beschriebenen Anordnungen gleichermaßen erfaßt.

Statt eines Prismas 11 kann auch ein entsprechend konstruiertes diffraktives optisches Element verwendet werden, beispielsweise ein Phasen- oder Transmissionsgitter. Dieses wird in einer Zwischenbildebene des Beleuchtungsstrahlengangs plaziert. Die beiden ebenen Wellen 6 entsprechen hier der positiven und negativen ersten Beugungsordnung des Gitters. Das Gitter kann so ausgestaltet sein, daß die nullte Beugungsordnung unterdrückt wird.

Sollte es aufgrund von beispielsweise beengten Platzverhältnissen nicht möglich sein, Prisma 11 oder das Gitter in unmittelbarer Nähe zum Abbildungsobjektiv 4 zu plazieren, so kann man sich behelfen, indem beispielsweise das Gitter oder Prisma 11 über eine optische Anordnung mit 4f-Geometrie in die Fokusebene abgebildet wird. Eine solche, nicht zur Erfindung gehörige, jedoch deren Verständnis erleichternde Anordnung ist beispielhaft für ein Phasengitter 13 in Fig.4 dargestellt. Der Lichtstrahl 5 wird am Phasengitter 13 gebeugt, die nullte Beugungsordnung wird ausgeblendet, die positive und negative erste Beugungsordnung werden weiterverwendet. Das Phasengitter 13 befindet sich in der Brennebene einer zweiten Zylinderlinse 14, die die ebenen Wellen 6 entsprechend ihrer Frequenz auf Punkte in der probenseitigen Brennebene abbildet, weshalb diese auch als Fourierebene 15 bezeichnet wird. Dort können Manipulationen im Frequenzraum vorgenommen werden, beispielsweise kann eine Apodisierungsblende eingebracht werden.

Die Fourierebene 15 ist gleichzeitig auch die beleuchtungsseitige Brennebene der ersten Zylinderlinse 10, die entsprechend wieder ebene Wellen 6 erzeugt und auf die Fokusebene abbildet, wo sie konstruktiv indifferieren. Die probenseitige Brennebene der ersten Zylinderlinse 10 befindet sich etwa im Bereich der optischen Achse des Abbildungsobjektivs 4.

Während die bisher gezeigten Anordnungen sämtlich zur Erzeugung eines statischen Lichtblattes 7 basierend auf der konstruktiven Interferenz zweier ebener Wellen vorgesehen sind, so lassen sich auch rotationssymmetrische Besselstrahlen, d.h. beugungsfreie Strahlen, deren transversales (Y, Z) Intensitätsprofil sich entlang der optischen Achse der Beleuchtungsrichtung X nicht ändert, zur Erzeugung eines dynamischen bzw. effektiven Lichtblatts 7 verwenden. Eine solche Anordnung ist beispielhaft in Fig.5 dargestellt. Aus dem kohärenten und kollimierten Lichtstrahl 5 wird mit Hilfe eines optischen Elements 16 ein rotationssymmetrischer Besselstrahl 17 erzeugt. Das optische Element 16 kann beispielsweise eine ringförmige Blende, ein Axikon oder eine entsprechend ausgestaltete Phasenmaske sein. Auch ein räumlicher Lichtmodulator (SLM) kann verwendet werden. Beispielhaft wurden auch hier wieder nur zwei ebene Wellen 6 dargestellt, der Besselstrahl 17 ist jedoch eine rotationssymmetrische Überlagerung vieler ebener Wellen.

Über eine erste Linse 18 und eine zweite Linse 19, die zusammen mit dem optischen Element 16 entsprechend einer 4f-Geometrie angeordnet sind, wird der Besselstrahl 17 in die Fokusebene des Abbildungsobjektivs 4 abgebildet. Auch dort wird nur eine strichförmige Region beleuchtet. In der Fourierebene 15 zwischen den beiden Linsen 18 und 19 befindet sich jedoch ein rotierender Spiegel 20, dessen Rotationsachse in der Fourierachse 15 liegt, mit dem der Besselstrahl 17 in der Fokusebene über die Probe 3 geführt wird. Auf diese Weise läßt sich ein effektives Lichtblatt erzeugen.

Mit den vorangehend beschriebenen Anordnungen läßt sich die Schärfentiefe des Lichtblatts 7 bei der SPIM-Mikroskopie in Beleuchtungsrichtung erhöhen, wodurch bei der Beobachtung ein größeres Bildfeld zur Verfügung steht. Gleichzeitig kann der Schattenwurf vermindert werden.

### Bezugszeichenliste

- 1: Beleuchtungsquelle
- 2: Beleuchtungsoptik
- 3: Probe
- 4: Abbildungsobjektiv
- 5: Lichtstrahl
- 6: ebene Welle
- 7: Lichtblatt
- 8: Blende
- 9: Spalt
- 10: erste Zylinderlinse
- 11: Prisma
- 12: Eintrittsfläche
- 13: Phasengitter
- 14: zweite Zylinderlinse
- 15: Fourierebene
- 16: optisches Element
- 17: Besselstrahl
- 18: erste Linse
- 19: zweite Linse
- 20: rotierender Spiegel

- α: Prismenwinkel
- d₁, dₛ: Ausdehnung des Lichtblatts
- X: Beleuchtungsrichtung
- Z: Beobachtungsrichtung

## Patentansprüche

1. Mikroskop, umfassend
- ein Abbildungsobjektiv (4) zur Abbildung einer Probe (3) auf einen Detektor und
- Mittel zur Beleuchtung der Probe (3) mit einem Lichtblatt (7) in der Fokusebene des Abbildungsobjektivs (4), umfassend eine kohärentes Licht abstrahlende Beleuchtungsquelle (1), wobei die Mittel zur Beleuchtung
- ein optisches Element (16), mit dem aus dem Lichtstrahl (5) ein rotationssymmetrischer Besselstrahl (17) erzeugt wird,
- eine erste und eine zweite Linse (10, 14), wobei optisches Element (16), erste und zweite Linse (10, 14) entsprechend einer 4f-Geometrie mit einer Fourierebene (15) zwischen den beiden Linsen (10, 14) ausgestaltet und angeordnet sind, wodurch der Besselstrahl in die Fokusebene des Abbildungsobjektivs (4) abgebildet wird, sowie
- Abtastmittel, mit denen der Besselstrahl (17) in der Fokusebene des Abbilungsobjektivs (4) die Probe (3) abtastet, umfassen.

2. Mikroskop nach Anspruch 1, **dadurch gekennzeichnet, daß** die Abtastmittel einen rotierenden Spiegel (20) mit einer Rotationsachse in der Fourierebene umfassen.

3. Mikroskop nach Anspruch 1 oder 2, **dadurch gekennzeichnet, dass** das optische Element (16) eine ringförmige Blende, ein Axikon oder eine Phasenmaske ist.

## Claims

1. Microscope, comprising
- an imaging objective lens (4) for imaging a sample (3) onto a detector and
- means for illuminating the sample (3) with a light sheet (7) in the focal plane of the imaging objective lens (4), comprising an illumination source (1) that emits coherent light, wherein the means for illuminating comprise
- an optical element (16), by means of which a rotationally symmetric Bessel beam (17) is produced from the light beam (5),
- a first and a second lens (10, 14), wherein optical element (16), first and second lens (10, 14) are designed and arranged in accordance with a 4f geometry with a Fourier plane (15) between the two lenses (10, 14), as a result of which the Bessel beam is imaged in the focal plane of the imaging objective lens (4), and
- scanning means, by means of which the Bessel beam (17) scans the sample (3) in the focal plane of the imaging objective lens (4).

2. Microscope according to Claim 1, **characterized in that** the scanning means comprise a rotating mirror (20) with an axis of rotation in the Fourier plane.

3. Microscope according to Claim 1 or 2, **characterized in that** the optical element (16) is a ring-shaped stop, an axicon or a phase mask.

## Revendications

1. Microscope, comprenant
- un objectif de reproduction (4) destiné à la reproduction d'un échantillon (3) sur un détecteur et
- des moyens destinés à l'éclairage de l'échantillon (3) avec une lame de lumière (7) dans le plan focal de l'objectif de reproduction (4), comprenant une source d'éclairage (1) émettant de la lumière cohérente,
les moyens destinés à l'éclairage comprenant
- un élément optique (16) avec lequel un faisceau de Bessel (17) symétrique en rotation est produit à partir du faisceau lumineux (5),
- une première et une deuxième lentille (10, 14), l'élément optique (16), la première et la deuxième lentille (10, 14) étant constitués et disposés selon une géométrie 4f avec un plan de Fourier (15) entre les deux lentilles (10, 14), ce qui fait que le faisceau de Bessel est reproduit dans le plan focal de l'objectif de reproduction (4), ainsi que
- des moyens de balayage avec lesquels le faisceau de Bessel (17) balaye l'échantillon (3) dans le plan focal de l'objectif de reproduction (4).

2. Microscope selon la revendication 1, **caractérisé en ce que** les moyens de balayage comprennent un miroir (20) rotatif avec un axe de rotation dans le plan de Fourier.

3. Microscope selon la revendication 1 ou 2, **caractérisé en ce que** l'élément optique (16) est un diaphragme annulaire, un axicon ou un masque de phase.
